# EUROPEAN PATENT SPECIFICATION

(11) **EP 3 958 040 B1**
(45) Date of publication and mention of the grant of the patent: **02.08.2023**
(21) Application number: 20869524.7
(22) Date of filing: 19.03.2020
(51) Int. Cl.: G02B 27/01, G02B 27/00, G02B 27/42, G02B 26/08, G02B 27/30

(54) **NEAR-EYE DISPLAY SYSTEM FOR PUPIL EXPANSION BASED ON DIFFRACTIVE OPTICAL ELEMENT**
AUGENNAHES ANZEIGESYSTEM FÜR PUPILLENEXPANSIONEN BASIEREND AUF EINEM DIFFRAKTIVEN OPTISCHEN ELEMENT
SYSTÈME D'AFFICHAGE PROCHE DE L'OEIL POUR EXPANSION DE PUPILLE BASÉ SUR UN ÉLÉMENT OPTIQUE DIFFRACTIF

(30) Priority: 24.09.2019 CN 201910903337
(43) Date of publication of application: 23.02.2022
(73) Proprietor: Shenzhen Lochn Optics Hi-Tech Co., Ltd., Shenzhen, Guangdong 518000 (CN)
(72) Inventor: SONG, Qiang, Shenzhen, Guangdong 518000 (CN); TANG, Xiaoyun, Shenzhen, Guangdong 518000 (CN); XU, Hengshen, Shenzhen, Guangdong 518000 (CN); MA, Guobin, Shenzhen, Guangdong 518000 (CN); WANG, Tao, Shenzhen, Guangdong 518000 (CN)
(74) Representative: Petculescu, Ana-Maria
(86) International application number: PCT/CN2020/080207
(87) International publication number: WO 2021/056992

(56) References cited:
- WO-A1-2019/174447
- CN-A- 105 676 454
- CN-A- 110 221 428
- CN-A- 110 456 512
- US-A1- 2003 086 173
- US-A1- 2013 208 362
- US-A1- 2016 282 615
- US-A1- 2016 282 615

## Description

This application is based upon and claims priority to Chinese Patent Application No. 2019109033376, filed before China National Intellectual Property Administration on September 24, 2019 and entitled "NEAR-EYE DISPLAY SYSTEM FOR PUPIL EXPANSION BASED ON DIFFRACTIVE OPTICAL ELEMENT".

### TECHNICAL FIELD

The present disclosure relates to the technical field of augmented reality, and in particular, relates to a near-eye display system for pupil expansion based on a diffractive optical element.

### BACKGROUND

Augmented reality is the technology that merges virtual information with a real world. The design of a near-eye display system is critical to the augmented reality technology. How to simultaneously improve the field of view (FOV), eye box, brightness, uniformity, and contrast of the near-eye display system and reduce power consumption and volume of the system becomes a hot issue in this field.

At present, the near-eye display system generally adopts a micro display screen such as a liquid crystal display (LCD), a light emitting diode (LED) display, a digital light processing (DLP), or a liquid crystal on silicon (LCOS). These different types of micro displays have their own advantages and disadvantages, but have a common defect, that is, a limited FOV. For a greater FOV, the area of the micro display screen needs to be increased. This, however, increases volume and weight of the system. The eye box refers to a cone-shaped area between a near-eye display optical module and an eyeball, eyes can see the clearest images in this area, and the size of area needs to be at least as large as a pupil of a human eye, that is, about 4 mm. Since a relative movement may be present between the human eye and the near-eye display optical module, for a better view, it is necessary to expand the eye box, and expansion of the eye box is also referred to as pupil expansion.

At present, in a commonly used method for pupil expansion, a plurality of splitting films that are parallelly distributed are embedded in a waveguide sheet, and part of light is coupled out each time encountering the splitting films during propagation in the waveguide, and uniformity of the coupled image is ensured by adjusting reflection and transmittance rate of the splitting films at different positions, thereby achieving pupil expansion in a transversal direction. This pupil expansion relies on traditional optics, and wavelength, angle sensitivity, flatness of the bonding of the splitting film need to be precisely controlled, such that processing difficulty is great and yield of mass production is low. In addition, this solution is still defective in that only unidirectional pupil expansion is achieved. In another method for pupil expansion, three grating regions are distributed on the waveguide sheet, including a coupling-in grating, a turning grating, and a coupling-out grating. The turning grating is responsible for transversal pupil expansion and the coupling-out grating is responsible for longitudinal pupil expansion. Both the turning grating and the coupling-out grating are divided into a plurality of sub-regions. After light encounters a sub-region, part of the light is diffractively diverted or coupled out, and the rest of the light continues to be propagated along the waveguide sheet. The uniformity of the coupled image is ensured by controlling diffraction efficiency by height adjustment of the gating in each sub-regions, thereby achieving bidirectional pupil expansion. Such pupil expansion relies on diffractive optics. An area position of the grating and a height of the grating in different regions need to be precisely regulated, such that the processing difficulty and cost are extremely high. In addition, the image brightness and uniformity of the optical module based on this pupil expansion method are also low.

US2003086173A1 discloses a display system. The display system includes a diffraction grating that generates exit-pupil images, where one of the exit-pupil images has a first intensity and the remaining exit-pupil images each have or approximately have a second intensity that is less than the first intensity. The system also includes a filter that attenuates the intensity of the one exit-pupil image. In one example, the filter attenuates the 0th-order exit-pupil image so that all of the exit-pupil images have the same or approximately the same intensities.

US2016282615A1 discloses a light flux diameter expanding element (a pupil expanding element) used in a retina scanning display device. The light flux expanding element includes first to fourth diffraction gratings which are provided with grating patterns extending in a first direction, and fifth to eighth diffraction gratings which are provided with grating patterns extending in a second direction, and includes a half-wave plate between the first diffraction grating and the fifth diffraction grating. A first light flux of polarized light in which an electric field vector oscillates in the first direction enters the first diffraction grating. A second light flux of polarized light in which the electric field vector oscillates in the second direction enters the fifth diffraction grating due to the half-wave plate. Therefore, it is possible to expand a diameter of the incident first light flux in the first direction and the second direction and emit the result as the third light flux.

### SUMMARY

In view of the above, it is necessary to provide a near-eye display system for pupil expansion based on a diffractive optical element to simplify the manufacturing process, reduce the processing difficulty and manufacturing cost, and increase the FOV.

To achieve the above objective, the present disclosure provides the following technical solutions:
A near-eye display system for pupil expansion based on a diffractive optical element includes:
a laser light source, the laser light source being configured to emit a light beam of tri-primary color wavelengths;
a diffusion sheet, arranged on an emergent light path of the laser light source, and configured to obtain a light beam of a predetermined shape by shaping and homogenizing the light beam of = the tri-primary color wavelengths;
a micro-electro-mechanical system (MEMS) scanning mirror, arranged on an emergent light path of the diffusion sheet, and configured to obtain a scanning light beam by scanning the light beam of the predetermined shape at a plurality of angles;
a diffractive optical element, arranged on an emergent light path of the MEMS scanning mirror, and configured to divide the scanning light beam into a plurality of beams of scanning light;
a collimating lens module, arranged on an emergent light path of the diffractive optical element, and configured to convert the plurality of beams of the scanning light into a plurality of beams of parallel light;
a mirror, arranged on an emergent light path of the collimating lens module, and configured to reflect the plurality of beams of parallel light; and
a reflective diffraction structure, arranged on a reflection light path of the mirror, and configured to diffract a plurality of beams of reflected light to a human eye, such that the human eye sees a superimposed image of a real world and a virtual world;
wherein the reflective diffraction structure includes a substrate and a reflective diffraction layer arranged on the substrate, the reflective diffraction layer is configured to diffract the plurality of beams of reflected light, and the substrate is a transparent lens.
wherein the diffractive optical element is a dot matrix diffractive optical element and divides a single light beam into N x M beams of light with equal intensity, wherein N and M are both positive integers.
wherein the diffusion sheet is a diffractive optical element structure or a micro lens array structure.

In some embodiments, the reflective diffraction layer is a blazed grating.

In some embodiments, the reflective diffraction layer is an oblique grating.

In some embodiments, the MEMS scanning mirror is a two-dimensional MEMS scanning mirror.

Compared with the related art, the present disclosure achieves the following beneficial effects:
The present disclosure provides a near-eye display system for pupil expansion based on a diffractive optical element. Configuration of the diffractive optical element in the system is intended to split the light, and pupil expansion may be achieved as long as one diffractive optical element is needed, such that manufacturing process is simple and system light loss is small. Imaging adopts the MEMS scanning mirror, and displaying adopts the reflective diffractive structure. The MEMS scanning mirror can expand the FOV by changing scanning angles of the scanning mirror. Optical waveguide imaging requires light to be totally reflected and propagated in the waveguide sheet. For a greater FOV, the waveguide material with a higher refractive index needs to be used. However, in the present disclosure, the diffraction imaging using the reflective diffractive structure is no longer subject to such restriction. In the present disclosure, the manufacturing process is simple, and the processing difficulty and the manufacturing cost are low. In addition, power consumption and volume of the system are reduced while improvements of FOV, eye box, brightness, uniformity, and contrast are achieved.

### BRIEF DESCRIPTION OF THE DRAWINGS

For clearer descriptions of the technical solutions according to the embodiments of the present disclosure, drawings that are to be referred for description of the embodiments are briefly described hereinafter. Apparently, the drawings described hereinafter merely illustrate some embodiments of the present disclosure. Persons of ordinary skill in the art may also derive other drawings based on the drawings described herein without any creative effort.
FIG. 1 is a schematic structural view of a near-eye display system for pupil expansion based on a diffractive optical element according to an embodiment of the present disclosure;
FIG. 2 is a schematic view of distribution of light intensity after incident light passes through a diffusion sheet;
FIG. 3 is a schematic structural view of a 9 x 9 dot matrix diffractive optical element;
FIG. 4 is a schematic view of an imaging dot matrix of a 9 x 9 dot matrix diffractive optical element; and
FIG. 5 is a schematic view of a pattern array formed by scanning imaging with 9x9 beams of light.

### DETAILED DESCRIPTION OF THE EMBODIMENTS

The technical solutions contained in the embodiments of the present disclosure are described in detail clearly and completely hereinafter with reference to the accompanying drawings for the embodiments of the present disclosure. Apparently, the described embodiments are only a portion of embodiments of the present disclosure, but not all the embodiments of the present disclosure.

For ease of understanding of the objectives, features, and advantages of the present disclosure, the present disclosure is described in detail with reference to the attached drawings and specific embodiments.

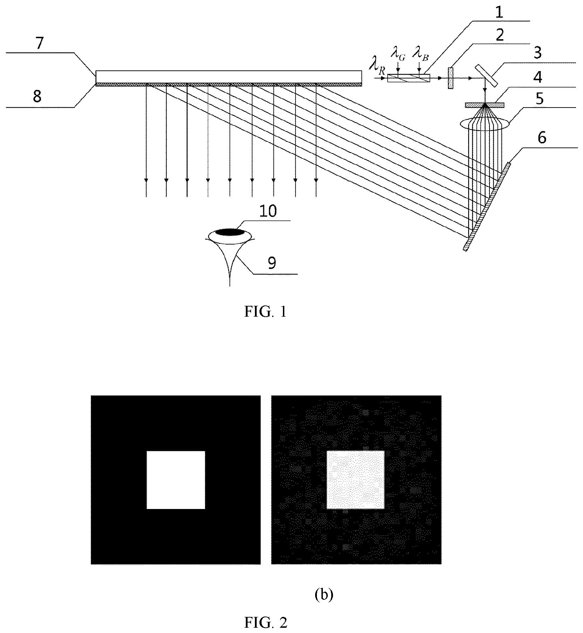

FIG. 1 is a schematic structural view of a near-eye display system for pupil expansion based on a diffractive optical element according to an embodiment of the present disclosure.

Referring to FIG. 1, the near-eye display system according to this embodiment includes:
A laser light source 1, configured to emit lasers of tri-primary color wavelengths. The lasers of the tri-primary color wavelengths are lasers of red, green, and blue (RGB) tri-primary color wavelengths. The red laser has a wavelength of *λ_{R},* the green laser has a wavelength of *λ_{G}*, and the blue laser has a wavelength of *λ_{B}*.

In some other embodiments, the laser light source 1 is further configured to emit a laser of a monochromatic wavelength or bi-primary color wavelengths.

A diffraction sheet 2, arranged on an emergent light path of the laser light source 1. The diffraction sheet 2 is configured to obtain a light beam of a predetermined shape by shaping and homogenizing the lasers of the tri-primary color wavelengths.

In some other embodiments, when the laser light source 1 emits the laser of the monochromatic wavelength or bi-primary color wavelengths, the diffusion sheet 2 is configured to obtain the light beam of the predetermined shape by shaping and homogenizing the laser of the monochromatic wavelength or the bi-primary color wavelengths.

In some other embodiments, the laser light source may be replaced by an LED light source, and after the laser light source is replaced by the LED light source, the LED light source is configured to emit a light beam of a monochromatic wavelength, bi-primary color wavelengths, or tri-primary color wavelengths.

In some other embodiments, when the laser light source is replaced by the LED light source, the diffusion sheet 2 is arranged on an emergent light path of the LED light source, and configured to obtain the light beam of the predetermined shape by shaping and homogenizing the light beam of the monochromatic wavelength, the bi-primary color wavelengths, or the tri-primary color wavelengths.

A micro-electro-mechanical system (MEMS) arranged on an emergent light path of the diffusion sheet 2. The MEMS scanning mirror 3 is configured to obtain a scanning light beam by scanning the light beam of the predetermined shape at a plurality of angles. In practice, scanning of incident light at a plurality of angles is achieved by controlling biaxial movement of the MEMS scanning mirror 3.

A diffractive optical element 4 arranged on an emergent light path of the MEMS scanning mirror 3. The diffractive optical element 4 is configured to divide the scanning light beam into a plurality of beams of scanning light. In practice, the number and form of light beams may be changed by replacing the diffractive optical element with different structures.

A collimating lens module 5 arranged on an emergent light path of the diffractive optical element 4. The collimating lens module 5 is configured to convert the plurality of beams of the scanning light into a plurality of beams of parallel light.

A mirror 6 arranged on an emergent light path of the collimating lens module 5. The mirror 6 is configured to reflect the plurality of beams of parallel light.

A reflective diffraction structure arranged on a reflection light path of the mirror 6. The reflective diffraction structure is configured to diffract a plurality of beams of reflected light to a human eye 9, such that the human eye sees a superimposed image of a real world and a virtual world.

The reflective diffraction structure includes a substrate 7 and a reflective diffraction layer 8 arranged on the substrate 7. The plurality of beams of parallel light are reflected to the reflective diffraction structure by using the mirror 6, and the light acts on the reflective diffraction layer 8 of the reflective diffraction structure to generate diffraction, such that diffracted light enters the human eye, and the near-eye display is implemented.

The diffractive optical element 4 is a dot matrix diffractive optical element.

The diffusion sheet 2 is a diffractive optical element structure or a micro lens array structure.

In an alternative embodiment, the reflective diffraction layer 8 is a blazed grating or an oblique grating. In practice, diffraction efficiency and uniformity of grating are controlled by adjusting such parameters as duty, groove depth, and coating thickness of the grating.

In an alternative embodiment, the reflective diffraction layer 8 is a holographic structure.

The substrate 7 is a transparent lens.

In an alternative embodiment, the MEMS scanning mirror 3 is a two-dimensional MEMS scanning mirror.

The near-eye display system for pupil expansion based on a diffractive optical element is described hereinafter according to a specific embodiment.

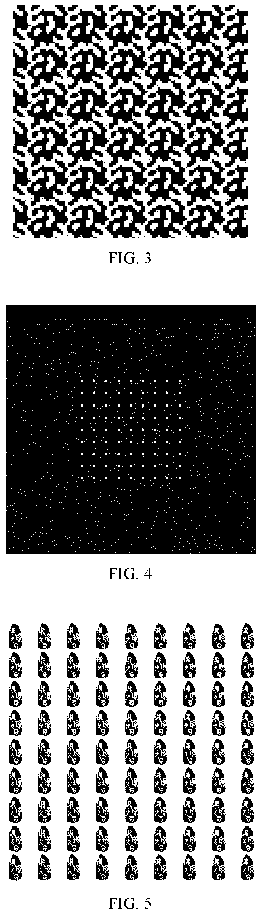

The light emitted by the laser light source sequentially passes through the diffusion sheet, the MEMS scanning mirror, a 9 x 9 dot matrix diffractive optical element, the collimating lens module, and the mirror, and enters the human eye in response to encountering the reflective diffraction layer in the reflective diffraction structure. The diffusion sheet is configured to shape and homogenize the light emitted by the laser light source, such that the incident light is shaped into a target shape, and distribution of light intensity in a target area is more uniform. FIG. 2 is a schematic diagram of distribution of light intensity after incident light passes through the diffusion sheet, wherein part (a) in FIG. 2 illustrates an ideal result, and part (b) in FIG. 2 illustrates a simulation result using a diffusion sheet. The MEMS scanning mirror performs scanning imaging by changing a reflection angle of the incident light. The 9x9 dot matrix diffractive optical element converts a single beam of the incident light into 9 x 9 beams of light, and the collimating lens module converts the 9 x 9 beams of light into parallel light, the mirror reflects the incident parallel light to the reflective diffraction layer, the reflective diffraction layer diffracts the 9 x 9 beams of parallel light to the pupil 10 and then the light enters the human eye 9. The transparent lens is used as the substrate such that the human eye can see the superimposed image of the real world and the virtual projection. The structure of the dot matrix diffractive optical element can be designed using related software based on the scalar diffraction theory. FIG. 3 is a schematic structural diagram of a 9 x 9 dot matrix diffractive optical element which can convert a single beam of light into 9 x 9 beams of light. FIG. 4 is a schematic diagram of an imaging dot matrix of a 9 x 9 dot matrix diffractive optical element. FIG. 5 is a schematic view of a pattern array formed by scanning imaging with 9x9 beams of light.

In the near-eye display system for pupil expansion based on the diffractive optical element according to the embodiment, imaging adopts the MEMS scanning mirror, displaying adopts the reflective diffractive structure, and the pupil expansion is achieved by the diffractive optical element. In this way, power consumption and volume of the system are reduced while improvements of FOV, eye box, brightness, uniformity, and contrast of are implemented. Specifically:
(1) The method for pupil expansion is simple and achieves a good effect. The diffractive optical element divides a single light beam into N x M beams of light with equal intensity, wherein N and M are both positive integers. After a beam of laser is irradiated to the diffractive optical element, a diffraction pattern of the laser is a rectangular lattice with regularly distributed, and the pattern of the rectangular lattice is adjustable. The manufacture of the diffractive optical element is easy and the diffraction efficiency is high. Therefore, bidirectional pupil expansion by using the diffractive optical element has greater advantages: The uniformity of imaging may be improved and the processing difficulty and cost may be reduced, and in addition, mass production may be achieved.
(2) The MEMS scanning mirror and the reflective diffraction structure are configured for diffractive imaging, and the FOV may be adjusted without being restricted by the refractive index of the material. Applying the MEMS scanning mirror to the imaging of the near-eye display system reduces size, weight, and power consumption of the system, and achieves higher brightness and contrast. In addition, the FOV may be enlarged by changing a scanning angle of a two-dimensional scanning mirror. Optical waveguide imaging requires the light to be totally reflected and propagated in the waveguide sheet. For a greater FOV, the waveguide material with a higher refractive index needs to be used. However, the diffraction imaging using a reflective diffractive structure is no longer subject to this restriction.

In the specification, the principles and embodiments of the present disclosure are illustrated with reference to specific exemplary embodiments or examples. However, the description of the above embodiments is merely for ease of understanding of the method and core concept of the present disclosure. In the meantime, persons of ordinary skill in the art would derive variations or modifications to the present disclosure based on the concept of the present disclosure and the specific embodiments and application scope thereof. In conclusion, the content of the specification shall not be construed as limiting the present disclosure.

## Claims

1. A near-eye display system for pupil dilation based on a diffractive optical element, comprising:
a laser light source (1), the laser light source (1) being configured to emit a light beam of tri-primary color wavelengths;
a diffusion sheet (2), arranged on an emergent light path of the laser light source (1), and configured to obtain a light beam of a predetermined shape by shaping and homogenizing the light beam;
a micro-electro-mechanical system (MEMS) scanning mirror (3), arranged on an emergent light path of the diffusion sheet (2), and configured to obtain a scanning light beam by scanning the light beam of the predetermined shape at a plurality of angles;
a diffractive optical element (4), arranged on an emergent light path of the MEMS scanning mirror (3), and configured to divide the scanning light beam into a plurality of beams of scanning light;
a collimating lens module (5), arranged on an emergent light path of the diffractive optical element (4), and configured to convert the plurality of beams of the scanning light into a plurality of beams of parallel light;
a mirror (6), arranged on an emergent light path of the collimating lens module (5), and configured to reflect the plurality of beams of parallel light; and
a reflective diffraction structure, arranged on a reflection light path of the mirror (6), and configured to diffract a plurality of beams of reflected light to a human eye (9), such that the human eye (9) sees a superimposed image of a real world and a virtual world;
**characterized in that** the reflective diffraction structure comprises a substrate (7) and a reflective diffraction layer (8) arranged on the substrate (7); the reflective diffraction layer (8) being configured to diffract the plurality of beams of reflected light; the substrate (7) being a transparent lens; wherein the diffractive optical element (4) is a dot matrix diffractive optical element; wherein the diffusion sheet (2) is a diffractive optical element structure or a micro lens array structure;
wherein the diffractive optical element (4) divides a single light beam into N x M beams of light with equal intensity, wherein N and M are both positive integers.

2. The near-eye display system according to claim 1, **characterized in that** the reflective diffraction layer (8) is a blazed grating.

3. The near-eye display system according to claim 1, **characterized in that** the reflective diffraction layer (8) is an oblique grating.

4. The near-eye display system according to claim 1, **characterized in that** the MEMS scanning mirror (3) is a two-dimensional MEMS scanning mirror.

## Patentansprüche

1. Augennahes Anzeigesystem zur Pupillenerweiterung auf Grundlage eines optischen Beugungselements, umfassend:
eine Laserlichtquelle (1), wobei die Laserlichtquelle (1) dazu konfiguriert ist, einen Lichtstrahl der drei Grundfarbenwellenlängen abzustrahlen;
ein Diffusionsflächengebilde (2), das in einem Austrittslichtpfad der Laserlichtquelle (1) angeordnet und dazu konfiguriert ist, einen Lichtstrahl von vorgegebener Form zu erlangen, indem sie den Lichtstrahl formt und homogenisiert;
einen Abtastspiegel (3) mit einem mikroelektromechanischen System (MEMS), der an einem Austrittslichtpfad des Diffusionsflächengebildes (2) angeordnet und dazu konfiguriert ist, einen Abtastlichtstrahl zu erlangen, indem er den Lichtstrahl von vorgegebener Form in einer Vielzahl von Winkeln abtastet;
ein optisches Beugungselement (4), das an einem Austrittslichtpfad des MEMS-Abtastspiegels (3) angeordnet und dazu konfiguriert ist, den Abtastlichtstrahl in Vielzahl von Strahlen von Abtastlicht zu teilen;
ein Kollimierungslinsenmodul (5), das an einem Austrittslichtpfad des optischen Beugungselements (4) angeordnet und dazu konfiguriert ist, die Vielzahl von Strahlen von Abtastlicht in eine Vielzahl von Strahlen von Parallellicht umzuwandeln;
einen Spiegel (6), der an einem Austrittslichtpfad des Kollimierungslinsenmoduls (5) angeordnet und dazu konfiguriert ist, die Vielzahl von Strahlen von Parallellicht zu reflektieren; und
eine reflektierende Beugungsstruktur, die an einem Reflexionslichtpfad des Spiegels (6) angeordnet und dazu konfiguriert ist, eine Vielzahl von Strahlen von reflektiertem Licht an ein menschliches Auge (9) zu beugen, derart, dass das menschliche Auge (9) ein übereinander gelagertes Bild der echten Welt und einer virtuellen Welt sieht;
**dadurch gekennzeichnet, dass** die reflektierende Beugungsstruktur einen Träger (7) und eine reflektierende Beugungsschicht (8) umfasst, die auf dem Träger (7) angeordnet ist; wobei die reflektierende Beugungsschicht (8) dazu konfiguriert ist, die Vielzahl von Strahlen von reflektiertem Licht zu beugen; wobei der Träger (7) eine transparente Linse ist; wobei das optischen Beugungselement (4) ein optisches Punktmatrixbeugungselement ist; wobei das Diffusionsflächengebilde (2) eine optische Beugungselementstruktur oder eine Mikrolinsenarraystruktur ist;
wobei das optischen Beugungselement (4) einen einzelnen Lichtstrahl in N x M Lichtstrahlen gleicher Stärke aufteilt, wobei N und M beide positive Ganzzahlen sind.

2. Augennahes Anzeigesystem nach Anspruch 1, **dadurch gekennzeichnet, dass** die reflektierende Beugungsschicht (8) ein Blazegitter ist.

3. Augennahes Anzeigesystem nach Anspruch 1, **dadurch gekennzeichnet, dass** die reflektierende Beugungsschicht (8) ein Schräggitter ist.

4. Augennahes Anzeigesystem nach Anspruch 1, **dadurch gekennzeichnet, dass** der MEMS-Abtastspiegel (3) ein zweidimensionaler MEMS-Abtastspiegel ist.

## Revendications

1. Un système d'affichage près de l'œil pour dilatation de la pupille basé sur un élément optique diffractif, comprenant :
une source de lumière laser (1), la source de lumière laser (1) étant configurée pour émettre un faisceau de lumière à longueurs d'ondes des trois couleurs primaires ;
un feuillet de diffusion (2), agencé sur un chemin de lumière émergeante de la source de lumière laser (1), et configuré pour obtenir un faisceau de lumière d'une forme prédéterminée en modelant et homogénéisant le faisceau de lumière ;
un miroir de balayage de système micro-électro-mécanique (MEMS) (3), agencé sur un chemin de lumière émergeante de la source de lumière laser (2), et configuré pour obtenir un faisceau de lumière de balayage en balayant le faisceau de lumière de la forme prédéterminée sur une pluralité d'angles ;
un élément optique diffractif (4), agencé sur un chemin de lumière émergeante du miroir de balayage de système micro-électro-mécanique MEMS (3), et configuré pour diviser le faisceau de lumière de balayage en une pluralité de faisceaux de lumière de balayage ;
a module de lentille collimatrice (5), agencé sur un chemin de lumière émergeante de l'élément optique diffractif (4), et configuré pour convertir la pluralité de faisceaux de lumière de balayage en une pluralité de faisceaux de lumière parallèles ;
un miroir (6), agencé sur un chemin de lumière émergeante du module de lentille collimatrice (5), et configuré pour refléter la pluralité de faisceaux de lumière parallèles ; et
une structure de diffraction réfléchissante, agencée sur un chemin de lumière de réflexion du miroir (6), et configurée pour diffracter une pluralité de faisceaux de lumière réfléchie sur l'œil humain (9), de sorte que l'œil humain (9) voit une image superposée du monde réel et du monde virtuel ;
**caractérisé en ce que** la structure de diffraction réfléchissante comprend un substrat (7) et une couche de diffraction réfléchissante (8) agencée sur le substrat (7) ; la couche de diffraction réfléchissante (8) étant configurée pour diffracter la pluralité de faisceaux de lumière réfléchie ; le substrat (7) étant une lentille transparente ; dans lequel l'élément optique diffractif (4) est un élément optique diffractif à matrice de points ; dans lequel le feuillet de diffusion (2) est une structure à élément optique diffractif ou une structure à rangée de micro lentilles ;
dans lequel l'élément optique diffractif (4) divise un faisceau de lumière unique en N x M faisceaux de lumière d'intensité égale, dans lequel N et M sont tous deux des nombres entiers positifs.

2. Un système d'affichage près de l'œil selon la revendication 1, **caractérisé en ce que** la couche de diffraction réfléchissante (8) est un réseau échelette.

3. Un système d'affichage près de l'œil selon la revendication 1, **caractérisé en ce que** la couche de diffraction réfléchissante (8) est un réseau oblique.

4. Un système d'affichage près de l'œil selon la revendication 1, **caractérisé en ce que** le miroir de balayage MEMS (3) est un miroir de balayage MEMS à deux dimensions.
